# EUROPÄISCHE PATENTSCHRIFT

(11) **EP 0 896 147 B1**
(45) Veröffentlichungstag und Bekanntmachung des Hinweises auf die Patenterteilung: **17.10.2001**
(21) Anmeldenummer: 98113923.1
(22) Anmeldetag: 24.07.1998
(51) Int. Cl.: F02M 1/16, F02M 31/18

(54) **Kraftstoffversorgungsanlage für eine Brennkraftmaschine**
Fuel delivery system for a combustion engine
Installation d'alimentation en carburant pour un moteur à combustion

(30) Priorität: 08.08.1997 DE 19734493
(43) Veröffentlichungstag der Anmeldung: 10.02.1999
(73) Patentinhaber: DaimlerChrysler AG, 70567 Stuttgart (DE)
(72) Erfinder: Holder, Eberhard, 72127 Kusterdingen (DE); Kemmler, Roland, 70619 Stuttgart (DE)

(56) Entgegenhaltungen:
- WO-A-91/04405
- WO-A-92/05360
- DE-C- 4 215 949
- FR-A- 2 142 414
- GB-A- 1 524 467
- GB-A- 2 209 796
- US-A- 3 788 283
- US-A- 3 799 125
- US-A- 4 220 120

## Beschreibung

Die Erfindung betrifft eine Kraftstoffversorgungsanlage für eine Brennkraftmaschine nach der im Oberbegriff von Anspruch 1 näher definierten Art.

Eine Kraftstoffversorgungsanlage bzw. ein Kraftstoffversorgungssystem dieser Art ist aus der US 4 220 120 bekannt. Aufgabe dieser Kraftstoffversorgungsanlage ist es, von der Kraftstoffzuleitung aus Kraftstoff abzuzweigen und in einer Verdampfungs- und Kondensierungseinrichtung niedrig siedende Kraftstoffanteile zu gewinnen, die während des Kaltstartes der Brennkraftmaschine der Einspritzeinrichtung zugeleitet werden, um zum einen einen sicheren Kaltstart zu gewährleisten und zum anderen die Rohemission der Brennkraftmaschine in der Warmlaufphase zu reduzieren und den Schadstoffausstoß insgesamt zu vermindern. Der in der Verdampfungs- und Kondensierungseinrichtung anfallende höher siedende Kraftstoffanteil kann über eine Restkraftstoffrückleitung zu dem Kraftstofftank zurückgeleitet werden.

Wenn die Rückführung des Restkraftstoffes nicht mehr in den Kraftstofftank, sondern in einen gesonderten Zusatztank, erfolgt, kann von dem Zusatztank aus gezielt eine Beimischung in die zu der Einspritzeinrichtung führende Kraftstoffzuleitung oder auch eine ausschließliche Kraftstoffversorgung der Einspritzeinrichtung mit dem Restkraftstoff erfolgt. Der Restkraftstoff hat im Vergleich zu dem Ausgangskraftstoff in dem Kraftstofftank eine höhere Oktanzahl. Wird dem Motor nun erfindungsgemäß bei einer hohen Lastanforderung, insbesondere bei Vollast, der auf diese Weise abgesonderte und in dem Zusatztank zurückgehaltene Restkraftstoff zugeführt, so kann in Verbindung mit einer bekannten Klopfregelung die Klopfbegrenzung vermieden und jeweils der optimale Zündwinkel eingestellt werden. Daraus resultiert bei Vollast bzw. bei höheren Lasten ein deutlicher Leistungs- und Verbrauchsvorteil bei gleichzeitiger Absenkung der maximalen Abgastemperatur.

Auf diese Weise läßt sich auch die Zeit zur Bereitstellung der erforderlichen Startkraftstoffmenge aus niedrig siedenden Kraftstoffanteilen stets gleich halten. Wird nämlich der Restkraftstoff nicht dem allgemeinen Kraftstofftank zugeleitet, so kann dort nicht im Laufe des Betriebes eine Anreicherung mit höher siedenden Kraftstoffanteilen entstehen. Insbesondere bei häufigen Kaltstarts würde sich im Laufe der Zeit der Anteil an nieder siedenden Kraftstoffanteilen auf diese Weise reduzieren, so daß deren Gewinnung in der Verdampfungs- und Kondensierungseinrichtung entsprechend zunehmend schwieriger werden würde.

Der vorliegenden Erfindung liegt eine weitere Verbesserung der vorstehend beschriebenen Kraftstoffversorgungsanlage zugrunde, insbesondere der Art, daß noch bessere Leistungs- und Verbrauchsvorteile damit erzielt werden können.

Erfindungsgemäß wird diese Aufgabe durch die im Anspruch 1 genannten Merkmale gelöst.

Durch die erfindungsgemäße Maßnahme wird die bei der Kondensierung der niedrig siedenden Kraftstoffanteile anfallende Kondensationswärme in nutzbringender Weise verwertet. Insbesondere wird auf diese Weise eine bessere und schnellere Verdampfung des damit der Verdampfungseinrichtung mit erhöhter Temperatur zugeführten Kraftstoffes erreicht, wodurch noch bessere Leistungsund Verbrauchsvorteile erzielt werden.

Vorteilhafte Ausgestaltungen und Weiterbildungen der Erfindung ergeben sich aus den übrigen Unteransprüchen und aus dem nachfolgend anhand der Zeichnung beschriebenen Ausführungsbeispiel.

Es zeigt:

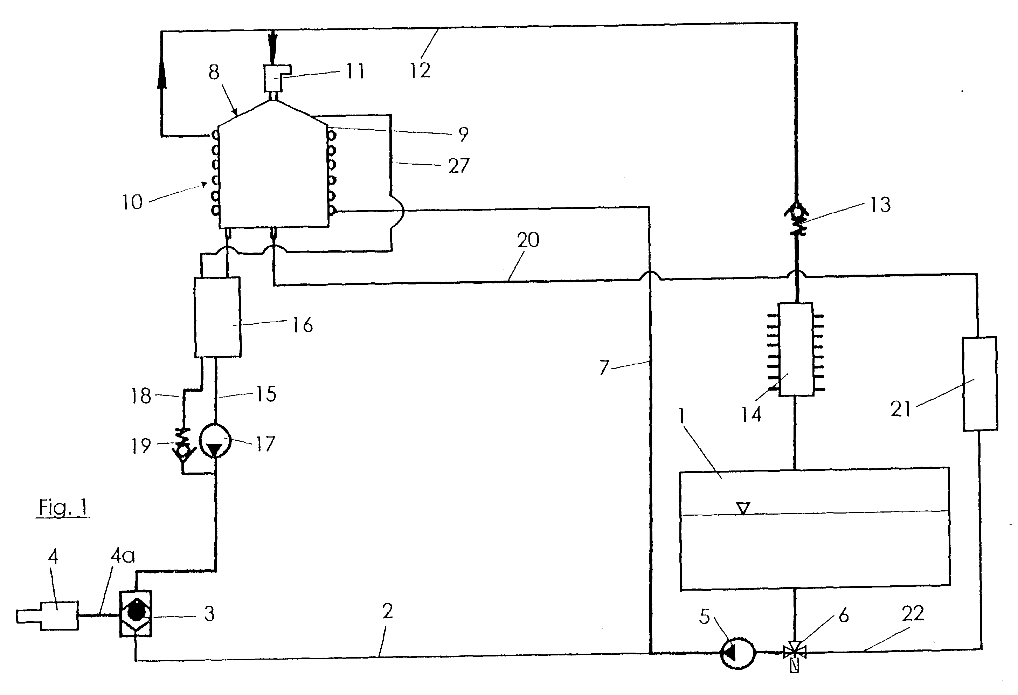

- Fig. 1: in Prinzipdarstellung die erfindungsgemäße Kraftstoffversorgungsanlage, und
- Fig. 2: in Prinzipdarstellung die erfindungsgemäße Verdampfungs- und Kondensierungseinrichtung.

Von einem Kraftstofftank 1 aus führt eine Kraftstoffzuleitung 2 über ein Wechselventil 3 als Steuerventil zu einer Einspritzleitung 4a mit einem Einspritzventil 4, das Kraftstoff in einen nicht dargestellten Brennraum einer Brennkraftmaschine einspritzt. Von der Kraftstoffzuleitung 2 zweigt nach einer Kraftstoffpumpe 5 und einem dieser vorgeschalteten Umschaltventil 6 eine Nebenleitung 7 ab. Die Nebenleitung 7 ist spiralförmig um eine Verdampfungs- und Kondensierungseinrichtung 8 gewickelt. Die spiralförmige Wickelung bildet mit einer Außenwand 9 in Zylinderform der Verdampfungs- und Kondensierungseinrichtung 8 eine Wärmetauschereinrichtung 10. Die Nebenleitung 7 mündet von oben her über ein Einspritzventil 11, das als herkömmliches elektromagnetisches Einspritzventil ausgebildet sein kann, in die Verdampfungs- und Kondensierungseinrichtung 8. Über das Einspritzventil 11 erfolgt in Verbindung mit einem Verdampfungsglied 11a, z.B. eines PTC-Verdampfers eine Verdampfung des zugeführten Kraftstoffes. Das Einspritzventil 11 kann zusammen mit dem Verdampfungsglied 11a auch als kombinierte Einheit ausgebildet sein.

Überschüssiger Kraftstoff aus der Nebenleitung 7 wird über eine Rückleitung 12, in der ein Druckbegrenzungsventil 13 angeordnet ist und einen Kraftstoffkühler 14 in den Kraftstofftank 1 zurückgeleitet.

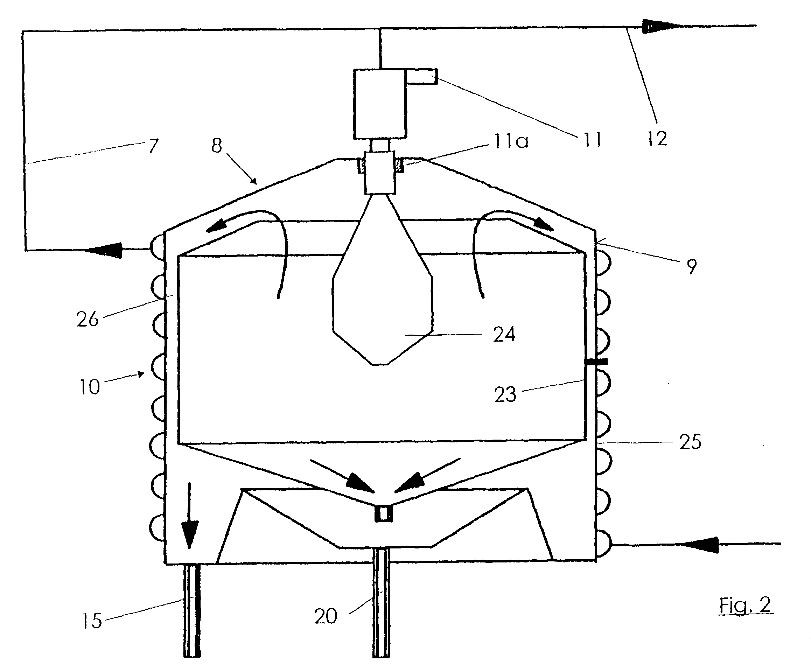

In der Verdampfungs- und Kondensierungseinrichtung 8 erfolgt eine Trennung der Kraftstoffbestandteile in niedrig siedende und höher siedende Kraftstoffanteile. Das Verfahren und der Aufbau der Verdampfungs- und Kondensierungseinrichtung 8 wird nachfolgend anhand der Fig. 2 näher beschrieben.

Die niedrig siedenden Kraftstoffanteile werden in einer Kondensatleitung 15, in der sich ein Zwischentank 16 für das Kondensat und eine Kraftstoffpumpe 17 mit einer Bypassleitung 18, in der sich ein Druckbegrenzungsventil 19 befindet, zu dem Wechselventil 3 geführt. Die in der Verdampfungs- und Kondensierungseinrichtung 8 anfallenden höher siedenden Kraftstoffanteile werden über eine Restkraftstoffleitung 20 zu einem Zusatztank 21 zurückgeleitet. Von dem Zusatztank 21 aus führt eine Restkraftstoffzuleitung 22 zu dem Umschaltventil 6.

Fig. 2 zeigt Aufbau und Wirkungsweise der Verdampfungs- und Kondensierungseinrichtung 8. Die Verdampfungs- und Kondensierungseinrichtung 8 weist ein inneres Gehäuse 23 in Zylinderform als Sammler auf, in das der von dem Einspritzventil 11 mit Verdampfungsglied 11a verdampfte Kraftstoff als Dampf-/Tropfenwolke 24 eingeblasen wird. Das innere Gehäuse 23 besitzt eine geringe Wärmekapazität und ist mit mehreren Bolzen, z.B. drei am Umfang, mit einem äußeren Gehäuse 25 in Zylinderform verbunden. In dem inneren Gehäuse 23 fallen die höher siedenden Kraftstoffanteile aus und werden nach unten über die Restkraftstoffrückleitung 20 abgeführt.

Die niedrig siedenden Kraftstoffanteile treten als Dampf aus der oberen Öffnung des inneren Gehäuses bzw. Sammlers 23 aus (siehe Pfeile) und kondensieren an der Innenwand des äußeren Gehäuses 25. Dabei ist der Übergang vom inneren Gehäuse 23 zum äußeren Gehäuse 25 so zu gestalten, daß die in der Dampfwolke möglicherweise mitgeführten kleinen Tropfen mit höher siedenden Kraftstoffanteilen im inneren Gehäuse 23 zurückgehalten werden.

An der Außenwand 9 des äußeren Gehäuses 25 befindet sich der Wärmetauscher 10, der die bei der Kondensierung anfallende Kondensationswärme in die Nebenleitung 7 abführt. Am Boden des äußeren Gehäuses 25 befindet sich im Bereich eines Spaltes 26, der aufgrund der Durchmesserunterschiede zwischen dem inneren Gehäuse 23 und dem äußeren Gehäuse 25 entsteht, eine Ausgangsöffnung für die Kondensatleitung 15. In dem Spalt 26 läuft Kondensat entlang der Innenwand des äußeren Gehäuses 25 in Pfeilrichtung nach unten und wird in die Kondensatleitung 15 abgeführt.

Die erfindungsgemäße Kraftstoffversorgungsanlage funktioniert auf folgende Weise:

Die Kraftstoffzufuhr aus der Kraftstoffzuleitung 2 erfolgt über die herkömmliche Kraftstoffpumpe 5 mit z.B. 3,8 bar Überdruck. Der von der Kraftstoffzuleitung 2 hinter der Kraftstoffpumpe 5 in die Nebenleitung 7 abgezweigte Kraftstoff durchströmt zuerst den Wärmetauscher 10 an der Außenwand 9 der Verdampfungsund Kondensierungseinrichtung 8, um die Kondensationswärme aufzunehmen. Anschließend gelangt der auf diese Weise vorgewärmte Kraftstoff zum Einspritzventil 11 mit dem elektrisch beheizten Verdampfungsglied 11a. Die überschüssige Menge wird über das Druckbegrenzungsventil 13 und den Kraftstoffkühler 14 in den Kraftstofftank 1 in der Rückleitung 12 abgeführt.

Das aus den niedrig siedenden Kraftstoffanteilen bestehende Kondensat wird in dem Zwischentank 16 bevorratet. Über eine Ausgleichsleitung 27 ist der Zwischentank 16 noch mit der Verdampfungs- und Kondensierungseinrichtung 8 verbunden. Die Förderung des Kondensates in der Kondensatleitung 15 erfolgt über die zusätzliche Kraftstoffpumpe 17. Das Wechselventil 3, das eingangsseitig mit der Kraftstoffzuleitung 2 und der Kondensatleitung 15 und ausgangsseitig über die Einspritzleitung 4a mit dem Einspritzventil 4 verbunden ist, gibt vor jedem Einspritzventil 4 der Brennkraftmaschine jeweils den Kraftstoffpfad zu dem dazugehörigen Einspritzventil 4 frei und zwar den Kraftstoffpfad, dessen Kraftstoffpumpe gerade aktiv ist. Dies bedeutet, jedem Einspritzventil 4 ist ein Wechselventil 3 zugeordnet, das jeweils aus der Kondensatleitung 15 oder der Kraftstoffzuleitung 2 versorgt wird.

Durch das Wechselventil 3 und das Umschaltventil 6 kann durch eine gezielte Zuführung von Kraftstoff, nämlich Originalkraftstoff, niedrig siedender Kraftstoff aus der Kondensatleitung 15 oder Restkraftstoff mit höherer Oktanzahl aus der Restkraftstoffzuleitung 22, dafür gesorgt werden, daß die Brennkraftmaschine für einen optimalen Betrieb stets mit deren besten Kraftstoffanteilen versorgt wird.

Vor dem Abstellen der Brennkraftmaschine wird kurze Zeit mit Betrieb aus der Kondensatleitung 15 gefahren, wozu das Wechselventil 3 entsprechend umgeschaltet wird, damit beim darauffolgenden Start bereits ab der ersten Einspritzung wieder Kondensat aus der Kondensatleitung 15 in das dazugehörige Einspritzventil 4 eingespritzt werden kann. Mit fußgespülten Einspritzventilen 4 läßt sich dabei die Nachlaufzeit beim Abstellen der Brennkraftmaschine deutlich verringern.

Nach einem erneuten Start, wenn ein vorgegebener Grenzwert eine charakteristische Größe überschritten hat, z.B. die Kühlwassertemperatur, wird auf den Originalkraftstoff aus der Kraftstoffzuleitung 2 durch eine entsprechende Umschaltung des Wechselventiles 3 umgeschaltet.

Im Bereich der Vollast der Brennkraftmaschine erfolgt eine Umschaltung des Umschaltventiles 6 derart, daß Restkraftstoff aus dem Zusatztank 21 in die Kraftstoffzuleitung 2 gefördert wird, womit aufgrund der höheren Oktanzahl des Restkraftstoffes der Brennkraftmaschine klopffesterer Kraftstoff zugeführt wird.

## Patentansprüche

1. Kraftstoffversorgungsanlage für eine Brennkraftmaschine mit einem Kraftstofftank (1) für flüssigen Kraftstoff, von dem aus eine Kraftstoffzuleitung (2) zu einer Einspritzeinrichtung (4) führt, mit einer Verdampfungs- und Kondensierungseinrichtung (8) für niedrig siedende Kraftstoffanteile, die mit dem Kraftstofftank (1) verbunden ist, mit einem der Verdampfungs- und Kondensierungseinrichtung (8) nachgeschalteten Zwischentank (16) für das Kondensat, von dem aus eine Kondensatleitung (15) zu einem die Zufuhr zu der Einspritzeinrichtung (4) regelnden Steuerventil (3) führt, und mit einer die in der Verdampfungs- und Kondensierungseinrichtung (8) anfallenden höher siedenden Restkraftstoffanteile abführenden Restkraftstoffrückleitung (20), wobei die Restkraftstoffrückleitung (20) in einen Zusatztank (21) mündet, von dem aus eine Restkraftstoffzuleitung (22) zu einem in der Kraftstoffzuleitung (2) angeordneten Umschaltventil (6) führt, das so gesteuert ist, daß Restkraftstoff aus der Restkraftstoffzuleitung (22) in die zu der Einspritzeinrichtung (4) führende Kraftstoffzuleitung (2) wenigstens teilweise bei Vollast der Brennkraftmaschine zugeführt wird, **dadurch gekennzeichnet, dass** die Verdampfungs- und Kondensierungseinrichtung (8) mit einer Wärmetauschereinrichtung (10) versehen ist, die die bei der Kondensierung der niedrig siedenden Kraftstoffanteile anfallende Kondensationswärme an den zu der Verdampfungs- und Kondensierungseinrichtung (8) geführten Kraftstoff abgibt, wobei die Verdampfungs- und Kondensierungseinrichtung (8) ein inneres Gehäuse (23) als Sammler aufweist, in dem die höher siedenden Kraftstoffanteile ausfallen, und ein äußeres Gehäuse (25), an dem die niedrig siedenden Kraftstoffanteile ausfallen, wobei die Wärmetauschereinrichtung (10) an der Außenwand (9) des äußeren Gehäuses (25) angeordnet ist.

2. Kraftstoffversorgungsanlage nach Anspruch 1,
**dadurch gekennzeichnet, daß**
das innere Gehäuse (23) und das äußere Gehäuse (25) wenigstens annähernd jeweils eine Zylinderform aufweisen, wobei die Kondensierung der niedrig siedenden Kraftstoffanteile in einem ringförmigen Spalt (26) zwischen dem inneren Gehäuse (23) und dem äußeren Gehäuse (25) erfolgt und die Wärmetauschereinrichtung (10) eine spiralförmig um das äußere Gehäuse (25) gelegte Kraftstoffnebenleitung (7) aufweist.

3. Kraftstoffversorgungsanlage nach Anspruch 1 oder 2,
**dadurch gekennzeichnet, daß**
die Verdampfungs- und Kondensierungseinrichtung (8) mit einem Einspritzventil (11) zur Verdampfung des zugeführten Kraftstoffes versehen ist.

4. Kraftstoffversorgungsanlage nach einem der Ansprüche 1 bis 3,
**dadurch gekennzeichnet, daß**
das Steuerventil als Wechselventil (3) ausgebildet ist, in das eingangsseitig die Kraftstoffzuleitung (2) und die Kondensatleitung (15) mündet und das ausgangsseitig eine zu der Einspritzeinrichtung (4) führende Einspritzleitung (4a) aufweist.

5. Kraftstoffversorgungsanlage nach Anspruch 4,
**dadurch gekennzeichnet, daß**
zwischen dem Zwischentank (16) für Kondensat und dem Wechselventil (3) in der Kondensatleitung (15) eine Kraftstoffpumpe (17) angeordnet ist.

## Claims

1. Fuel feed unit for an internal combustion engine with a fuel tank (1), for a fluid fuel, from which a fuel feed duct (2) leads to an injection device (4), with a vaporization and condensation device (8), for fuel constituents with a low boiling point, which is connected to the fuel tank (1), with an intermediate tank (16) for the condensate, connected in after the vaporization and condensation device (8) and from which a condensate duct (15) leads to a control valve (3) that regulates the supply to the injection device (4), and with a residual fuel return duct (20), which removes residual fuel contents with a higher boiling point that are precipitated or deposited in the vaporization and condensation device (8), whereby the residual fuel return duct (20) opens into an additional tank (21) from which a residual fuel duct (22) leads to a reversing valve (6) disposed in the fuel feed duct (2) and controlled such that, when the internal combustion engine is operating to full capacity, the residual fuel, from the residual fuel feed duct (22), is at least partly supplied to the fuel feed duct (2) leading into the injection device (4), **characterized in that** the vaporization and condensation device (8) is provided with a heat exchanging device (10) which gives off the heat of condensation, arising with the condensation of the fuel constituents having a low boiling point, into the fuel which is fed to the vaporization and condensation device (8), whereby the vaporization and condensation device (8) has an inner casing (23) as an accumulator into which the fuel constituents with a higher boiling point are deposited, and an outer casing (25) into which fuel constituents with a low boiling point are deposited, whereby the heat-exchange device (10) is disposed on the outer face (9) of the outer casing (25).

2. Fuel supply unit in accordance with claim 1,
**characterized in that** the inner casing (23) and the outer casing (25) are, in each case, at least approximately cylindrical, whereby condensation of the fuel constituents with a low boiling point occurs in an annular gap (26) between the inner casing (23) and the outer casing (25), and the heat exchanger (10) has a secondary fuel duct (7) coiled around the outer casing (25).

3. Fuel supply unit in accordance with claim 1 or 2, **characterized in that** the vaporization and condensation device (8) is provided with an injection valve (11) for the vaporization of the supplied fuel.

4. Fuel supply unit in accordance with any of the foregoing claims,
**characterized in that** the control valve is formed as a changeover valve (3), into which, on the input side, the fuel feed duct (2) and the condensate duct (15) open, and which, on the output side, has an injection duct (4a) leading to the injection device (4).

5. Fuel supply unit in accordance with claim 4,
**characterized in that** a fuel pump (17) is disposed between the intermediate tank (16) for condensate and the changeover valve (3) in the condensate duct (15).

## Revendications

1. Dispositif d'alimentation en carburant pour un moteur à combustion interne avec un réservoir à carburant (1) pour du carburant liquide, d'où une conduite d'amenée en carburant (2) mène à un dispositif d'injection (4), avec un dispositif d'évaporation et de condensation (8) pour des fractions de carburant à bas point d'ébullition, dispositif relié au réservoir à carburant (1), avec un réservoir intermédiaire (16) branché en aval du dispositif d'évaporation et de condensation (8) pour le condensat, d'où une conduite de condensat (15) mène à une soupape de commande (3) réglant l'amenée au dispositif d'injection (4), et avec une conduite de retour de carburant résiduel (20) évacuant les fractions résiduelles de carburant à plus haut point d'ébullition apparaissant dans le dispositif d'évaporation et de condensation (8), la conduite de retour de carburant résiduel (20) débouchant dans un réservoir additionnel (21) d'où une conduite d'amenée en carburant résiduel (22) mène à une soupape de commutation (6) disposée dans la conduite d'amenée en carburant (2), soupape de commutation commandée de manière que le carburant résiduel, venant de la conduite d'amenée de carburant en carburant résiduel (22), soit amené au moins partiellement à la conduite d'amenée en carburant (2) menant au dispositif d'injection (4) lorsque le moteur à combustion interne est en pleine charge, **caractérisé en ce que** le dispositif d'évaporation et de condensation (8) est muni d'un dispositif échangeur de chaleur (10) qui évacue la chaleur de condensation, produite lors de la condensation des fractions de carburant à bas point d'ébullition, au carburant mené au dispositif d'évaporation et de condensation (8), le dispositif d'évaporation et de condensation (8) présentant un carter intérieur (23) faisant office de collecteur, dans lequel les fractions de carburant à plus haut point d'ébullition passent, et un carter extérieur (25) auquel viennent les fractions de carburant à bas point d'ébullition, le dispositif échangeur de chaleur (10) étant disposé sur la paroi extérieure (9) du carter extérieur (25).

2. Dispositif d'alimentation en carburant pour un moteur à combustion interne selon la revendication 1, **caractérisé en ce que** le carter intérieur (23) et le carter extérieur (25) présentent chacun une forme au moins à peu près cylindrique, la condensation des fractions de carburant à bas point d'ébullition se faisant dans un intervalle annulaire (26), situé entre le carter intérieur (23) et le carter extérieur (25), et le dispositif échangeur de chaleur (10) présentant une conduite de dérivation de carburant à forme spirale installée autour du carter extérieur (25).

3. Dispositif d'alimentation en carburant pour un moteur à combustion interne selon la revendication 1 ou 2, **caractérisé en ce que** le dispositif d'évaporation et de condensation (8) est muni d'une soupape d'injection (11) pour l'évaporation du carburant amené.

4. Dispositif d'alimentation en carburant pour un moteur à combustion interne selon l'une des revendications 1 à 3, **caractérisé en ce que** la soupape de commande est réalisée sous la forme de soupape à deux voies (3) dans laquelle, côté entrée, débouchent la conduite d'amenée en carburant (2) et la conduite à condensat (15) et qui présente, côté sortie, une conduite d'injection (4a) menant au dispositif d'injection (4).

5. Dispositif d'alimentation en carburant pour un moteur à combustion interne selon la revendication 4, **caractérisé en ce qu'**une pompe à carburant (17) est disposée dans la conduite de condensat (15), entre le réservoir intermédiaire (16), prévu pour le condensat, et la soupape à deux voies (3).
